# EUROPEAN PATENT APPLICATION

(11) **EP 4 650 683 A1**
(43) Date of publication of application: **19.11.2025**
(21) Application number: 23915810.8
(22) Date of filing: 26.12.2023
(51) Int. Cl.: F24F 11/36, F24F 11/64, F24F 11/61, F24F 11/77, F24F 11/65, F24F 13/10, F24F 11/526, F24F 11/84, F24F 11/86

(54) **METHOD AND APPARATUS FOR DETECTING REFRIGERANT LEAKAGE, AND AIR CONDITIONER AND STORAGE MEDIUM**

(30) Priority: 10.01.2023 CN 202310037936
(71) Applicant: Gree Electric Appliances, Inc. of Zhuhai, Zhuhai, Guangdong 519031 (CN)
(72) Inventor: LAI, Xiaocheng, Zhuhai, Guangdong 519031 (CN); JIANG, Shiheng, Zhuhai, Guangdong 519031 (CN); LIU, Shanshan, Zhuhai, Guangdong 519031 (CN); ZENG, Jing, Zhuhai, Guangdong 519031 (CN); LI, Lixia, Zhuhai, Guangdong 519031 (CN); CHEN, Zhenming, Zhuhai, Guangdong 519031 (CN)
(74) Representative: Lavoix
(86) International application number: PCT/CN2023/141955
(87) International publication number: WO 2024/149057

(57) **Abstract**

The present disclosure relates to a method and apparatus for detecting a refrigerant leakage, and an air conditioner and a storage medium. The detection method comprises: acquiring a usage state of an air conditioner (S1); according to the usage state of the air conditioner, acquiring a refrigerant leakage concentration (S2); when the air conditioner is in a shutdown state, if the refrigerant leakage concentration is greater than zero and less than a preset alarm concentration, starting timing until the refrigerant leakage concentration is equal to zero, or is equal to or greater than the preset alarm concentration (S3); if the duration of timing reaches a preset first duration, controlling a fan of the air conditioner to operate at a first power for a preset second duration (S4); and during the preset second duration for which the fan operates at the first power, if the currently acquired refrigerant leakage concentration is equal to or greater than the preset alarm concentration, controlling the air conditioner to enter a first alarm mode (S5).

## Description

### CROSS-REFERENCE TO RELATED APPLICATIONS

The present application claims priority to China Patent Application No. 202310037936.0 filed to CNIPA on January 10, 2023, the disclosure of which is incorporated by reference herein in its entirety for all purposes.

### TECHNICAL FIELD

The present disclosure relates to the technical field of household appliances, in particular to a method and apparatus for detecting refrigerant leakage, and an air-conditioner and a storage medium.

### BACKGROUND

With tightened environmental protection policies, the global household air-conditioning field is confronted with the problem of substitution by a refrigerant with a lower global warming potential (GWP) value. Compared with traditional refrigerants such as R22, R410A and R134A, R32 and R290 refrigerants with a lower GWP value are more favored by the market. R290 refrigerant has become a new favorite in the research field of environmental protection refrigerants because of its extremely low GWP value. However, since R290 refrigerant is extremely flammable and explosive, there are also more severe requirements for the usage environment.

In the related art, a gas detection sensor is generally provided to monitor the refrigerant concentration in the usage environment, to send an alarm in time when the refrigerant concentration in the usage environment is too high, avoiding the occurrence of safety accidents such as combustion and explosion caused by refrigerant leakage. However, in the actual monitoring process of the gas detection sensor, the gas detection sensor is present with errors in the detection of the refrigerant concentration at different leakage positions and in different leakage directions, which results in a low detection accuracy, a high false positive rate and a great safety risk of refrigerant leakage in the actual usage environment.

### SUMMARY

The present disclosure provides a method and apparatus for detecting refrigerant leakage, an air-conditioner and a storage medium, to solve the technical problem of a low detection accuracy, a high false positive rate and a great safety risk of a traditional air-conditioner.

According to a first aspect of the present disclosure, provided is a method for detecting refrigerant leakage, comprising: obtaining a usage state of an air-conditioner; obtaining a refrigerant leakage concentration according to the usage state of the air-conditioner; starting timing until the refrigerant leakage concentration is equal to zero, or equal to or greater than a preset alarm concentration, if the refrigerant leakage concentration is greater than zero and less than the preset alarm concentration when the air-conditioner is in a power-off state; controlling a fan of the air-conditioner to operate at a first power for a preset second duration, if a duration of the timing reaches a preset first duration; and controlling the air-conditioner to enter a first alarm mode, if the refrigerant leakage concentration that is currently obtained is equal to or greater than the preset alarm concentration during the preset second duration for which the fan operates at the first power.

In the first aspect, the first alarm mode comprises: controlling an air deflector of the air-conditioner to open; controlling the fan to operate at a second power, wherein the second power is greater than the first power; and controlling the air-conditioner to emit a buzzer sound or display an alarm.

In the first aspect, the preset first duration is in a range of 8 seconds to 12 seconds.

In the first aspect, the preset first duration is 10 seconds.

In the first aspect, the preset second duration is in a range of 2 seconds to 3 seconds.

In the first aspect, the first power is a minimum power.

In the first aspect, the second power is a maximum power.

In the first aspect, the method further comprises: controlling the air-conditioner to remain in the power-off state, if the refrigerant leakage concentration is equal to zero when the air-conditioner is in the power-off state.

In the first aspect, the method further comprises: controlling the air-conditioner to enter the first alarm mode, if the refrigerant leakage concentration is equal to or greater than the preset alarm concentration when the air-conditioner is in the power-off state.

In the first aspect, the method further comprises: controlling the air-conditioner to enter a second alarm mode, if the refrigerant leakage concentration is equal to or greater than the preset alarm concentration when the air-conditioner is in a power-on state.

In the first aspect, the second alarm mode comprises: controlling the air-conditioner to emit a buzzer sound or display an alarm; controlling a compressor of the air-conditioner to stop operation, and controlling the fan to operate at a third power; and obtaining an operation mode of the air-conditioner and adjusting an opening size of an electronic expansion valve of the air-conditioner according to the operation mode of the air-conditioner.

In the first aspect, adjusting the opening size of the electronic expansion valve of the air-conditioner according to the operation mode of the air-conditioner comprises: adjusting the opening size of the electronic expansion valve to be maximum, if the air-conditioner is in a heating mode; and adjusting the opening size of the electronic expansion valve to be minimum, if the air-conditioner is in a cooling mode.

According to a second aspect of the present disclosure, provided is an apparatus for detecting refrigerant leakage, comprising an obtaining module and a control module. The obtaining module is configured to obtain a usage state of an air-conditioner; obtain a refrigerant leakage concentration according to the usage state of the air-conditioner; and start timing until the refrigerant leakage concentration is equal to zero, or equal to or greater than a preset alarm concentration, if the refrigerant leakage concentration is greater than zero and less than the preset alarm concentration when the air-conditioner is in a power-off state. The control module is configured to control a fan of the air-conditioner to operate at a first power for a preset second duration, if a duration of the timing reaches a preset first duration; and control the air-conditioner to enter a first alarm mode, if the refrigerant leakage concentration that is currently obtained is equal to or greater than the preset alarm concentration during the preset second duration for which the fan operates at the first power.

According to a third aspect of the present disclosure, provided is an air-conditioner, comprising a memory and a processor. The memory stores executable instructions, and the processor is configured to execute the executable instructions. When the executable instructions are executed by the processor, the processor is caused to implement the method for detecting refrigerant leakage according to the first aspect.

According to a fourth aspect of the present disclosure, provided is a non-transitory computer-readable storage medium. The non-transitory computer-readable storage medium stores executable instructions that, when executed by a computer, cause the computer to implement the method for detecting refrigerant leakage according to the first aspect.

In the method and apparatus for detecting refrigerant leakage, the air-conditioner and the storage medium provided by the present disclosure, the method for detecting refrigerant leakage is optimized to improve the detection accuracy of refrigerant concentration at different leakage positions and in different leakage directions and improve the reliability of a detection result, thereby improving the safety of using the air-conditioner. Specifically, a usage state of the air-conditioner is first obtained to judge that the air-conditioner enters a power-off and refrigerant leakage detection procedure or enters a power-on and refrigerant leakage detection procedure, according to the usage state of the air-conditioner. When the air-conditioner is in the power-off state, that is, a non-operating state, the air-conditioner enters the power-off and refrigerant leakage detection procedure. In the power-off and refrigerant leakage detection procedure, if the refrigerant leakage concentration is greater than zero and less than a preset alarm concentration, timing is started until the refrigerant leakage concentration is equal to zero, or equal to or greater than the preset alarm concentration. At this time, the obtained refrigerant leakage concentration is insufficient to trigger the air-conditioner to alarm. However, to avoid the occurrence that the refrigerant is accumulated at the bottom of an indoor unit of the air-conditioner but is not detected by the detection apparatus, the accuracy and reliability of the obtained refrigerant leakage concentration need to be further confirmed. If the timing duration reaches a preset first duration, a fan of the air-conditioner is controlled to operate at a first power for a preset second duration, and during the preset second duration for which the fan operates at the first power, it is judged whether the refrigerant leakage concentration that is currently obtained reaches the preset alarm concentration. The air-conditioner is controlled to enter a first alarm mode when the refrigerant leakage concentration that is currently obtained is greater than the preset alarm concentration. At this time, the fan of the air-conditioner operates, and the operating fan can stir/disturb the refrigerant accumulated at the bottom of the indoor unit of the air-conditioner and cause the refrigerant to diffuse to the position where can be detected by the detection apparatus. In this way, if there is indeed a phenomenon that the refrigerant is accumulated at the bottom of the indoor unit of the air-conditioner, the refrigerant can also be accurately detected by the detection apparatus, which greatly improves a detection comprehensiveness, a reliability of detection result and an accuracy of detection result of refrigerant leakage, to improve the practicability and applicability of the detection apparatus. At the same time, the occurrence of accidents such as excessive local refrigerant concentration and explosion caused by the accumulation of leaked refrigerant at the bottom of the indoor unit of the air-conditioner are avoided, which effectively improves the safety of using the air-conditioner.

### BRIEF DESCRIPTION OF THE DRAWINGS

To more explicitly explain the technical solutions in the embodiments of the present disclosure or the prior art, the accompanying drawings required to be used in the description of the embodiments, or the prior art will be briefly introduced below. Apparently, for those of ordinary skill in the art, other accompanying drawings may also be obtained according to these accompanying drawings on the premise that no inventive effort is involved. In addition, in the accompanying drawings, a same reference sign is used for a same component, and the accompanying drawings are not drawn to actual scale.
Fig. 1 is a flowchart of a method for detecting refrigerant leakage according to embodiments of the present disclosure;
Fig. 2 is a flowchart of a first alarm mode according to embodiments of the present disclosure;
Fig. 3 is a flowchart of a method for detecting refrigerant leakage according to another embodiment of the present disclosure;
Fig. 4 is a flowchart of a method for detecting refrigerant leakage according to another embodiment of the present disclosure;
Fig. 5 is a flowchart of a method for detecting refrigerant leakage in a power-on state according to embodiments of the present disclosure;
Fig. 6 is a flowchart of a second alarm mode according to embodiments of the present disclosure;
Fig. 7 is a structural block diagram of an air-conditioner according to embodiments of the present disclosure.

### DETAILED DESCRIPTION

To make the objects, technical solutions and advantages of the embodiments of the present disclosure more explicit, the technical solutions in the embodiments of the present disclosure will be explicitly and fully described below in conjunction with the accompanying drawings in the embodiments of the present disclosure. Apparently, the embodiments described are some embodiments of the present disclosure, rather than all the embodiments. Based on the embodiments of the present disclosure, all the other embodiments obtained by those of ordinary skill in the art on the premise that no inventive effort is involved pertain to the protection scope of the present disclosure.

The terms used in the embodiments of the present disclosure are only for the purpose of describing specific embodiments, rather than limiting the present disclosure. The singular forms of "a", "said" and "the" used in the embodiments of the present disclosure and the appended claims are also intended to comprise multiple forms, and unless other meanings are explicitly indicated in the context, the term "a plurality of" generally comprises at least two, but does not exclude the inclusion of at least one.

It should be understood that, the term "and/or" used herein is only an associated relationship to describe associated objects, which presents that there are three relationships. For example, A and/or B indicates three circumstances including A present alone, A and B present at the same time, and B present alone. In addition, the character "/" herein generally indicates an "or" relationship between associated objects in the context.

It should be understood that, the relational terms such as "first" and "second" herein are only used to distinguish one entity or operation from another entity or operation, but do not necessarily require or imply any such actual relationship or sequence present between these entities or operations.

It is also to be noted that, the term "comprise", "contain" or any other variation thereof is intended to cover non-exclusive inclusions, so that a product or system that includes a series of elements includes not only those elements, but also other elements that are not explicitly listed, or elements inherent to such product or system. In a case without more restrictions, an element defined by the phrase "comprising a···" does not exclude an additional identical element also presents in the product or system comprising the element.

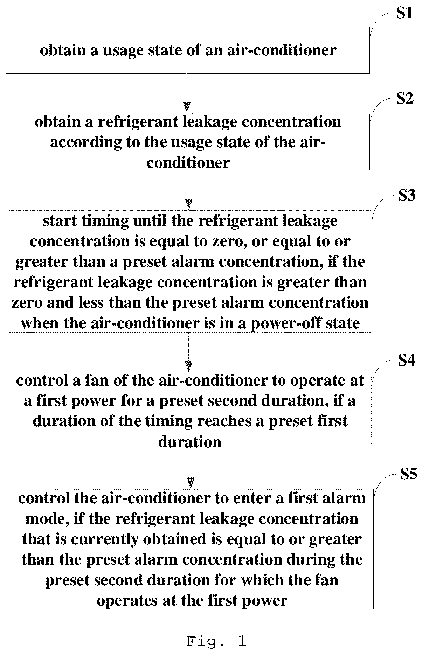

Referring to Fig. 1, according to a first aspect of the present disclosure, a method for detecting refrigerant leakage is provided. The method comprises steps S1 to S5.

At step S1, a usage state of an air-conditioner is obtained.

At step S2, a refrigerant leakage concentration is obtained according to the usage state of the air-conditioner.

At step S3, when the air-conditioner is in a power-off state, if the refrigerant leakage concentration is greater than zero and less than a preset alarm concentration, timing is started until the refrigerant leakage concentration is equal to zero, or equal to or greater than the preset alarm concentration.

At step S4, a fan of the air-conditioner is controlled to operate at a first power for a preset second duration, if a duration of the timing reaches a preset first duration.

At step S5, the air-conditioner is controlled to enter a first alarm mode, if the refrigerant leakage concentration that is currently obtained is equal to or greater than the preset alarm concentration during the preset second duration for which the fan operates at the first power.

In this embodiment, the method for detecting refrigerant leakage is optimized to improve the detection accuracy of the refrigerant concentration at different leakage positions and in different leakage directions to improve the reliability of a detection result, thereby improving the safety of using the air-conditioner.

Since a gas sensor (detection apparatus) is very sensitive to parameters such as humidity, air speed or temperature, its installation position on the indoor unit of the air-conditioner is limited. In the related art, the installation position of the gas sensor cannot be close to the air outlet, the water channel and the evaporator surface of the air-conditioner to avoid a condensation phenomenon of the detection apparatus. Based on this, in order to improve the detection accuracy of the gas sensor, the gas sensor is generally arranged below the air inlet of the air-conditioner and above the evaporator/water channel/air outlet to avoid the influence of external conditions such as a temperature of the evaporator, an air speed of the air outlet or a humidity of the water channel on the performance of the gas sensor. However, exactly due to a limited installation position of the gas sensor, and the property that the refrigerant density is higher than the air density so that the leaked refrigerant is easily accumulated at the bottom of the indoor unit of the air-conditioner, as well as a limited detection range of the gas sensor, when the gas sensor detects the air-conditioner in the power-off state, it is not likely/possible to detect the refrigerant at the bottom of the indoor unit of the air-conditioner, which causes false positive/false negative of the gas sensor, causing the reliability of refrigerant leakage detection result at different leakage positions and in different leakage directions ensure cannot be ensured.

Specifically, a usage state of the air-conditioner is first obtained to judge that the air-conditioner enters a power-off and refrigerant leakage detection procedure or enters a power-on and refrigerant leakage detection procedure, according to the usage state of the air-conditioner. When the air-conditioner is in the power-off state, that is, a non-operating state, the air-conditioner enters the power-off and refrigerant leakage detection procedure. In the power-off and refrigerant leakage detection procedure, if the refrigerant leakage concentration is greater than zero and less than a preset alarm concentration, timing is started until the refrigerant leakage concentration is equal to zero, or equal to or greater than the preset alarm concentration. At this time, the obtained refrigerant leakage concentration is insufficient to trigger the air-conditioner to alarm. However, to avoid the occurrence that the refrigerant is accumulated at the bottom of an indoor unit of the air-conditioner but is not detected by the detection apparatus, the accuracy and reliability of the obtained refrigerant leakage concentration need to be further confirmed. Therefore, the duration of the refrigerant leakage needs to be detected. If the duration of the timing reaches a preset first duration, a fan of the air-conditioner is controlled to operate at a first power for a preset second duration, and during the preset second duration for which the fan operates at the first power, it is judged whether the refrigerant leakage concentration that is currently obtained reaches the preset alarm concentration. The air-conditioner is controlled to enter a first alarm mode when the refrigerant leakage concentration that is currently obtained is greater than the preset alarm concentration. In this embodiment, if it is detected that the duration when the refrigerant leakage concentration is greater than zero and less than a preset alarm concentration reaches a preset first duration, it is indicated that the detection apparatus can continuously detect a refrigerant, but the refrigerant concentration is so low that the detection apparatus will not alarm. In order to avoid the occurrence that the leaked refrigerant is accumulated at the bottom of the air-conditioner but is not detected by the detection apparatus, the fan of the air-conditioner is controlled to operate to stir/disturb, by the operating fan, the refrigerant accumulated at the bottom of the indoor unit of the air-conditioner and cause the refrigerant to diffuse to the position where can be detected by the detection apparatus. In this way, if there is indeed a phenomenon that the refrigerant is accumulated at the bottom of the indoor unit of the air-conditioner, the refrigerant can also be accurately detected by the detection apparatus, which greatly improves a detection comprehensiveness, a reliability of detection result and an accuracy of detection result of refrigerant leakage, to improve the practicability and applicability of the detection apparatus. At the same time, the occurrence of accidents such as excessive local refrigerant concentration and explosion caused by the accumulation of leaked refrigerant at the bottom of the indoor unit of the air-conditioner are avoided, which effectively improves the safety of using the air-conditioner.

In an example, the preset alarm concentration is 20%~30% of a lower limit of refrigerant explosion. For example, the refrigerant is, but not limited to, R290 or R32.

In an example, the preset first duration is 8s to 12s, for example, but not limited, the preset first duration is 10s. Specifically, if the time during which the obtained refrigerant leakage concentration is greater than zero and less than the preset alarm concentration reaches 10s, in order to avoid the false positive of the obtained refrigerant leakage concentration, the fan of the air-conditioner is further controlled to operate to stir/disturb the air flow in the inner space of indoor unit of the air-conditioner, to improve the reliability and accuracy of the refrigerant leakage concentration.

In an example, the first power is a minimum power, and the preset second duration is 2s~3s. Specifically, in order to prevent the refrigerant leakage concentration detected by the detection apparatus is inaccurate due to accumulation of the refrigerant at the bottom of the indoor unit of the air-conditioner, the fan is controlled to operate for 2s~3s at the minimum power to stir/disturb the air inside the indoor unit of the air-conditioner. At this time, the air deflector is in a closed state, which will not cause the refrigerant to flow into the indoor environment from the air outlet of the air-conditioner.

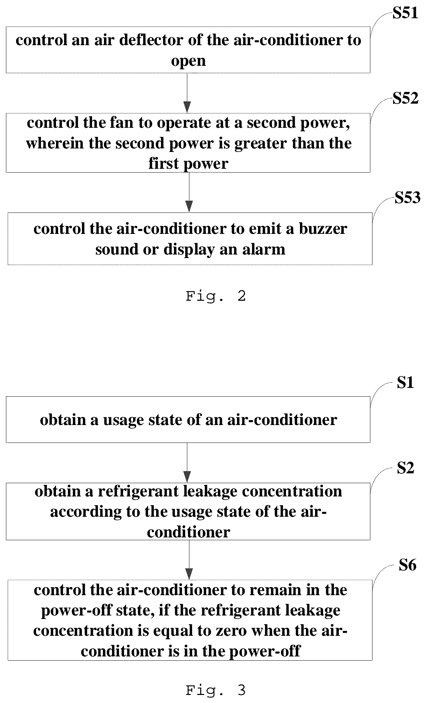

Referring to Fig. 2, in a possible implementation, the first alarm mode comprises steps S51 to S53.

At step S51, the air deflector of the air-conditioner is controlled to open.

At step S52, the fan is controlled to operate at a second power, wherein the second power is greater than the first power.

At step S53, the air-conditioner is controlled to emit a buzzer sound or display an alarm.

In this embodiment, the first alarm mode of the air-conditioner in the power-off state is optimized. Specifically, when it is detected that the air-conditioner in the power-off state suffers from refrigerant leakage (the refrigerant leakage concentration is equal to or greater than the preset alarm concentration), the air deflector of the air-conditioner is first opened to diffuse the refrigerant in the air-conditioner to the indoor environment, to reduce the refrigerant concentration in the air-conditioner, and avoid the refrigerant explosion caused by the local leaked refrigerant concentration reaching the explosion concentration. Then, the fan is controlled to operate at the second power greater than the first power, for example, but not limited to, the second power is a maximum power. In this way, the refrigerant can diffuse into the indoor environment at a faster speed, to rapidly reduce the refrigerant concentration in the air-conditioner. Finally, the air-conditioner is controlled to emit a buzzer sound or display an alarm, to remind a user to open the window to diffuse the refrigerant into the outdoor environment, and further dilute the refrigerant concentration in the indoor environment, and/or remind the user to contact a professional operator to repair the air-conditioner.

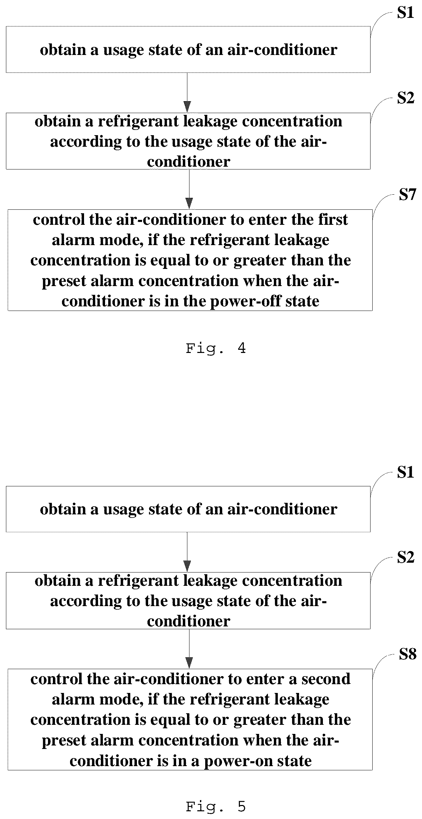

Referring to Figs. 3 and 4, in a possible implementation, after the step of obtaining the refrigerant leakage concentration according to the usage state of the air-conditioner, the above method for detecting further comprises steps S6 and S7.

At step S6, the air-conditioner is controlled to remain in the power-off state, if the refrigerant leakage concentration is equal to zero when the air-conditioner is in the power-off state.

At step S7, the air-conditioner is controlled to enter the first alarm mode, if the refrigerant leakage concentration is equal to or greater than the preset alarm concentration when the air-conditioner is in the power-off state.

In this embodiment, the power-off and refrigerant leakage detection procedure is further improved. Specifically, when the obtained refrigerant leakage concentration is equal to zero, it is indicated that the air-conditioner is not present with a refrigerant leakage problem, and the accessories of the air-conditioner have excellent performance. At this time, remain the original state. When the obtained refrigerant leakage concentration is equal to or greater than the preset alarm concentration, it is indicated that excessive refrigerant is leaked in the air-conditioner, and there is a risk of explosion at any time. At this time, the air-conditioner is controlled to enter the first alarm mode, to reduce the refrigerant concentration in the air-conditioner and remind a user that the air-conditioner is present with a risk in usage safety.

Referring to Fig. 5, in a possible implementation, after the step of obtaining the refrigerant leakage concentration according to the usage state of the air-conditioner, the above method for detecting further comprises step S8.

At step S8, the air-conditioner is controlled to enter a second alarm mode, if the refrigerant leakage concentration is equal to or greater than the preset alarm concentration when the air-conditioner is in the power-on state.

In this embodiment, the method for detecting refrigerant leakage of the air-conditioner in the power-on state is optimized to further improve the method for detecting refrigerant leakage. Specifically, the usage state of the air-conditioner is first obtained to judge that the air-conditioner enters the power-off and refrigerant leakage detection procedure or the power-on and refrigerant leakage detection procedure according to the usage state of the air-conditioner. When the air-conditioner is in the power-on state, that is, the operating state, the air-conditioner enters the power-on and refrigerant leakage detection procedure. In the power-on and refrigerant leakage detection procedure, since the fan in the power-on state is in an operating state, there is not present with a phenomenon that refrigerant is accumulated at the bottom of the indoor unit of the air-conditioner. Therefore, it is only necessary to compare the refrigerant leakage concentration with the preset alarm concentration. When the refrigerant leakage concentration is equal to or greater than the preset alarm concentration, it is indicated that the air-conditioner suffers from refrigerant leakage. At this time, the air-conditioner is controlled to enter the second alarm mode to reduce the refrigerant concentration in the indoor unit and lessen the refrigerant flow.

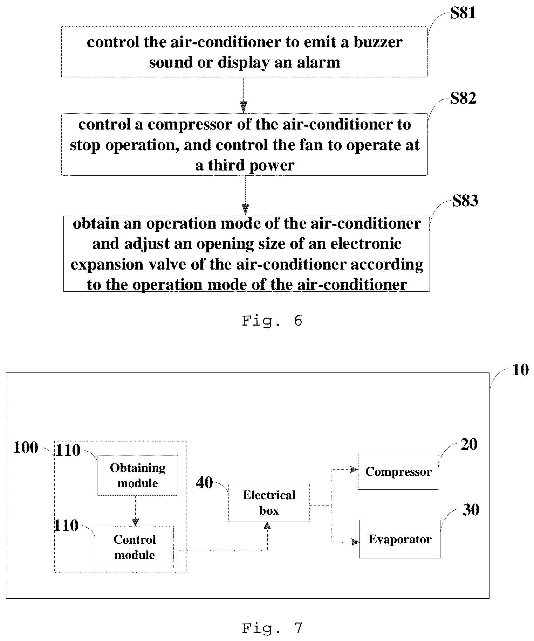

Referring to Fig. 6, in a possible implementation, the second alarm mode comprises steps S81 to S83.

At step S81, the air-conditioner is controlled to emit a buzzer sound or display an alarm.

At step S82, a compressor of the air-conditioner is controlled to stop operation, and the fan is controlled to operate at a third power.

At step S83, an operation mode of the air-conditioner is obtained, and an opening size of an electronic expansion valve of the air-conditioner is adjusted according to the operation mode of the air-conditioner. The opening size of the electronic expansion valve is adjusted to be maximum if the air-conditioner is in a heating mode; and the opening size of the electronic expansion valve is adjusted to be minimum if the air-conditioner is in a cooling mode.

In this embodiment, the second alarm mode of the air-conditioner in the power-on state is optimized. Specifically, when it is detected that the air-conditioner in the power-on state suffers from refrigerant leakage (the refrigerant leakage concentration is equal to or greater than the preset alarm concentration), the air-conditioner is first controlled to emit a buzzer sound and display an alarm, to remind the user to open the window to diffuse the refrigerant into the outdoor environment, and further dilute the refrigerant concentration in the indoor environment, or to remind the user to contact a professional operator to repair the air-conditioner. Then, the compressor is controlled to stop operation to reduce the refrigerant flow. At the same time, the air volume of the fan is increased, so that the leaked refrigerant enters the indoor environment at a faster speed. Finally, according to whether the air-conditioner is in a cooling or heating mode, the opening size, that is, opening degree, of the electronic expansion valve is correspondingly adjusted.

Specifically, when the air-conditioner is in the heating mode, there is high-pressure refrigerant at the indoor unit side of the air-conditioner. At this time, the opening size of the electronic expansion valve is adjusted to be maximum, which is beneficial for the refrigerant to flow outdoor to reduce the accumulation of the refrigerant in the indoor unit of the air-conditioner. When the air-conditioner is in the cooling mode, there is low-pressure refrigerant at the indoor unit side of the air-conditioner. At this time, the opening size of the electronic expansion valve is adjusted to be minimum to reduce the refrigerant flow to reduce the risk of forming explosive cloud clusters indoors.

For example, but not limited, the third power is the maximum power.

Each step of the above method may be performed by any suitable apparatus capable of performing corresponding functions. These apparatuses may comprise various hardware and/or software components and/or modules which comprise but not limited to a circuit, an application specific integrated circuit (ASIC) or a processor. It should be understood that, although various steps in the flowchart shown in the accompanying drawings are displayed sequentially as indicated by the arrows, these steps are not necessarily performed sequentially as indicated by the arrows. Unless specifically stated herein, these steps are performed without limitation to a strict sequence and may be performed in other sequences. Moreover, at least some steps in the flowchart shown in the accompanying drawings may comprise multiple sub-steps or multiple stages, which may not necessarily be completed at the same time and may be performed at different times. The multiple sub-steps or multiple stages are not necessarily performed sequentially and may be performed in turn or alternatively with other steps or at least some of sub-steps or stages of other steps.

Referring to Fig. 7, according to a second aspect of the present disclosure, an apparatus 100 for detecting refrigerant leakage is also provided. The apparatus 100 for detecting comprises an obtaining module 110 and a control module 120. The obtaining module 110 is configured to obtain a usage state of an air-conditioner; obtain a refrigerant leakage concentration according to the usage state of the air-conditioner; and start timing until the refrigerant leakage concentration is equal to zero, or equal to or greater than the preset alarm concentration, if the refrigerant leakage concentration is greater than zero and less than a preset alarm concentration when the air-conditioner is in a power-off state. The control module 120 is configured to control a fan of the air-conditioner to operate at a first power for a preset second duration, if the timing duration reaches a preset first duration; and control the air-conditioner to enter a first alarm mode, if the refrigerant leakage concentration that is currently obtained is equal to or greater than the preset alarm concentration during the preset second duration for which the fan operates at the first power.

In this embodiment, the apparatus 100 for detecting is configured to be a combined member at least comprising an obtaining module 110 and a control module 120. The obtaining module 110 is configured to obtain the usage state of the air-conditioner and the refrigerant leakage concentration and timing the refrigerant leakage. The control module 120 is configured to control the fan of the air-conditioner to operate at the first power for a preset second duration when the duration of timing reaches the preset first duration. The control module 120 is also configured to control the air-conditioner to enter the first alarm mode when the refrigerant leakage concentration is greater than the preset alarm concentration during the preset second duration for which the fan operates at the first power.

In an example, the obtaining module 110 is a semiconductor combustible gas sensor, and the control module 120 is a control chip.

Referring to Fig. 7, according to a third aspect of the present disclosure, an air-conditioner is also provided. The air-conditioner comprises a memory and a processor. The memory has executable instructions stored thereon. The processor is configured to execute executable instructions. When the executable instructions are executed by the processor, the processor is caused to implement the method for detecting refrigerant leakage as described above.

In this embodiment, for the specific steps of the method for detecting refrigerant leakage, reference may be made to the above embodiments. Since the air-conditioner uses all the technical solutions of all the above embodiments, the air-conditioner has all the beneficial effects brought by the technical solutions of the above embodiments, which will not be described in detail one by one here.

Continuing to refer to Fig. 7, in an example, the air-conditioner is an air-conditioning indoor unit. The air-conditioning indoor unit comprises a shell 10, and a compressor 20, an evaporator 30 and an electrical box 40 which are arranged inside the shell 10. The shell 10 is provided with an air inlet and an air outlet, an air inlet baffle is arranged at the air inlet, and an air deflector is arranged at the air outlet. The obtaining module 110 of the apparatus 100 for detecting is arranged on a panel of the shell 10 proximate to the air inlet, and the control module 120 of the detection apparatus 100 is communicatively connected to the electrical box 40 to transmit the detected information to the main control chip in the electrical box 40 in time for processing. The main control chip issues a corresponding execution instruction according to the received information.

According to a fourth aspect of the present disclosure, a computer-readable storage medium is also provided. The computer-readable storage medium has executable instructions stored thereon. When the executable instructions are executed by a computer, the computer is caused to implement the method for detecting refrigerant leakage as described above. For the specific solution of the method for detecting refrigerant leakage, reference may be made to the above embodiments. Since this storage medium uses all the technical solutions of all the above embodiments, this storage medium has all the beneficial effects brought by the technical solutions of the above embodiments, which will not be described in detail one by one here.

The above computer-readable medium may be a computer-readable signal medium, a computer-readable storage medium or any combination thereof. The computer-readable storage medium may be, for example, but is not limited to an electrical, magnetic, optical, electromagnetic, infrared, or semiconductor system, apparatus, or device, or a combination thereof. More specific examples of the computer-readable storage medium may comprise, but not limited to an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, a computer-readable storage medium may be any tangible medium that contains or stores a program which may be used by or in combination with an instruction execution system, apparatus, or device or used. In the present disclosure, the computer-readable signal medium may comprise a data signal propagated in a baseband or as a part of a carrier wave, wherein a computer-readable program code is carried in the data signal. Such propagated data signal may take many forms, comprising but not limited to an electromagnetic signal, an optical signal, or any suitable combination thereof. The computer-readable signal medium may also be any computer-readable medium other than the computer-readable storage medium. The computer-readable signal medium may send, propagate, or transmit a program for use by or in combination with an instruction execution system, apparatus, or device. The program code contained on the computer-readable medium may be transmitted by any suitable medium, comprising but not limited to a wire, an optical cable, radio frequency (RF), or the like, or any suitable combination thereof.

In a possible implementation, the method for detecting refrigerant leakage of the present disclosure may also be realized in the form of a program product. The program product comprises a program code, and when the program product is executed by a processor, the program code is used to cause the processor to implement the method for detecting refrigerant leakage described by the above embodiments.

The above content only pertains to detailed description of the present disclosure, so that those skilled in the art can understand or realize the present disclosure. Multiple modifications to these embodiments will be obvious for those skilled in the art, and the general principles defined herein may be realized in other embodiments without departing from the spirit or scope of this disclosure. Therefore, the present disclosure will not be limited to these embodiments shown herein and intended to conform to the broadest scope consistent with the principles and novel features disclosed herein.

## Claims

1. A method for detecting refrigerant leakage, **characterized by** comprising:
obtaining a usage state of an air-conditioner;
obtaining a refrigerant leakage concentration according to the usage state of the air-conditioner;
starting timing until the refrigerant leakage concentration is equal to zero, or equal to or greater than a preset alarm concentration, if the refrigerant leakage concentration is greater than zero and less than the preset alarm concentration when the air-conditioner is in a power-off state;
controlling a fan of the air-conditioner to operate at a first power for a preset second duration, if a duration of the timing reaches a preset first duration; and
controlling the air-conditioner to enter a first alarm mode, if the refrigerant leakage concentration that is currently obtained is equal to or greater than the preset alarm concentration during the preset second duration for which the fan operates at the first power.

2. The method according to claim 1, wherein the first alarm mode comprises:
controlling an air deflector of the air-conditioner to open;
controlling the fan to operate at a second power, wherein the second power is greater than the first power; and
controlling the air-conditioner to emit a buzzer sound or display an alarm.

3. The method according to claim 1, wherein the preset first duration is in a range of 8 seconds to 12 seconds.

4. The method according to claim 3, wherein the preset first duration is 10 seconds.

5. The method according to claim 1, wherein the preset second duration is in a range of 2 seconds to 3 seconds.

6. The method according to claim 1, wherein the first power is a minimum power.

7. The method according to claim 2, wherein the second power is a maximum power.

8. The method according to claim 1, wherein the method further comprises:
controlling the air-conditioner to remain in the power-off state, if the refrigerant leakage concentration is equal to zero when the air-conditioner is in the power-off state.

9. The method according to claim 1, wherein the method further comprises:
controlling the air-conditioner to enter the first alarm mode, if the refrigerant leakage concentration is equal to or greater than the preset alarm concentration when the air-conditioner is in the power-off state.

10. The method according to claim 1, wherein the method further comprises:
controlling the air-conditioner to enter a second alarm mode, if the refrigerant leakage concentration is equal to or greater than the preset alarm concentration when the air-conditioner is in a power-on state.

11. The method according to claim 10, wherein the second alarm mode comprises:
controlling the air-conditioner to emit a buzzer sound or display an alarm;
controlling a compressor of the air-conditioner to stop operation, and controlling the fan to operate at a third power; and
obtaining an operation mode of the air-conditioner and adjusting an opening size of an electronic expansion valve of the air-conditioner according to the operation mode of the air-conditioner.

12. The method according to claim 11, wherein adjusting the opening size of the electronic expansion valve of the air-conditioner according to the operation mode of the air-conditioner comprises:
adjusting the opening size of the electronic expansion valve to be maximum, if the air-conditioner is in a heating mode; and
adjusting the opening size of the electronic expansion valve to be minimum, if the air-conditioner is in a cooling mode.

13. An apparatus for detecting refrigerant leakage, **characterized by** comprising:
an obtaining module configured to obtain a usage state of an air-conditioner; obtain a refrigerant leakage concentration according to the usage state of the air-conditioner; and start timing until the refrigerant leakage concentration is equal to zero, or equal to or greater than a preset alarm concentration, if the refrigerant leakage concentration is greater than zero and less than the preset alarm concentration when the air-conditioner is in a power-off state; and
a control module configured to control a fan of the air-conditioner to operate at a first power for a preset second duration, if a duration of the timing reaches a preset first duration; and control the air-conditioner to enter a first alarm mode, if the refrigerant leakage concentration that is currently obtained is equal to or greater than the preset alarm concentration during the preset second duration for which the fan operates at the first power.

14. An air-conditioner, **characterized by** comprising:
a memory storing executable instructions;
a processor configured to execute the executable instructions to implement the method for detecting refrigerant leakage according to any of claims 1 to 12.

15. A non-transitory computer-readable storage medium, **characterized in that** the non-transitory computer-readable storage medium stores executable instructions that, when executed by a computer, cause the computer to implement the method for detecting refrigerant leakage according to any of claims 1 to 12.
